# EUROPÄISCHE PATENTANMELDUNG

(11) **EP 1 602 534 A1**
(43) Veröffentlichungstag der Anmeldung: **07.12.2005**
(21) Anmeldenummer: 05011592.2
(22) Anmeldetag: 30.05.2005
(51) Int. Cl.: B60R 21/20

(54) **Gassackmodul**

(30) Priorität: 01.06.2004 DE 202004008624 U
(71) Anmelder: TRW Automotive Safety Systems GmbH, 63743 Aschaffenburg (DE)
(72) Erfinder: Helmstetter, Matthias, 63743 Aschaffenburg (DE)
(74) Vertreter: Kitzhofer, Thomas

(57) **Zusammenfassung**

Ein Gassackmodul hat ein Gehäuse (12), das ein Deckelteil (16), wenigstens eine mit dem Deckelteil (16) verbundene Seitenwand (18) und einen mit der Seitenwand verbundenen Bodenabschnitt umfaßt. Das Gehäuse (12) weist mehrere vorbestimmte Separationslinien (26) auf, entlang derer sich das Gehäuse (12) bei einer Aktivierung des Gassackmoduls (10) öffnet, um einen Gassack (14) austreten zu lassen. Die Separationslinien (26) verlaufen so über das Deckelteil (16), die Seitenwand (18) und/oder den Bodenabschnitt, daß nach der Aktivierung das Gehäuse (12) entlang der Separationslinien (26) in mehrere nicht unmittelbar zusammenhängende Segmente (12a-d) zerfällt, die jeweils einen Abschnitt des Deckelteils(16), der Seitenwand (18) und des Bodenabschnitts umfassen.

## Beschreibung

Die Erfindung betrifft ein Gassackmodul, mit einem Gehäuse, das ein Deckelteil, wenigstens eine mit dem Deckelteil verbundene Seitenwand und wenigstens einen mit der Seitenwand verbundenen Bodenabschnitt umfaßt, wobei das Gehäuse mehrere vorbestimmte Separationslinien aufweist, entlang derer sich das Gehäuse bei einer Aktivierung des Gassackmoduls öffnet, um einen Gassack austreten zu lassen.

Es ist bekannt, im Deckelteil eines Gehäuses bzw. einer Abdeckkappe Schwächungszonen, z.B. in der Form von Sollbruchstellen oder Reißlinien, vorzusehen, so daß bei der Aktivierung des Gassackmoduls eine Austrittsöffnung für den Gassack freigegeben werden kann, indem Abschnitte der Abdeckkappe sich entlang der Schwächungszonen trennen und verschwenken. Es ist wichtig, daß eine genügend große Austrittsöffnung in möglichst kurzer Zeit freigegeben wird, um die Entfaltung des Gassacks nicht zu behindern. Die entstehenden Abschnitte der Abdeckkappe bzw. des Gehäuses können ausgenutzt werden, um die Entfaltung des Gassacks gezielt zu beeinflussen.

Aufgabe der Erfindung ist es, ein Gassackmodul zu schaffen, das diese Punkte auf einfache Weise erfüllt.

Dies wird bei einem oben genannten Gassackmodul erreicht, indem die Separationslinien so über das Deckelteil, die Seitenwand und/oder den Bodenabschnitt verlaufen, daß nach der Aktivierung das Gehäuse entlang der Separationslinien in mehrere nicht unmittelbar zusammenhängende Segmente zerfällt, die jeweils einen Abschnitt des Deckelteils, der Seitenwand und des Bodenabschnitts umfassen. Hierdurch kann eine große Austrittsöffnung sehr schnell freigegeben werden. Erfindungsgemäß hängen die Gehäusesegmente nicht mehr direkt zusammen, nachdem sich das Gehäuse entlang der Separationslinien geöffnet hat. Es besteht höchstens noch eine indirekte Verbindung über weitere Befestigungselemente, z.B. über die Verbindung des Gassackmoduls zu einem fahrzeugfesten Teil wie einer Instrumententafel oder einem Lenkrad, so daß die Segmente nicht lose in den Fahrzeuginnenraum gelangen können. Die Segmente des Gehäuses können auch z.B. durch einen Gasgenerator oder ein Gassackhalteelement miteinander und mit dem Fahrzeug verbunden bleiben. Das Deckelteil bildet den nach außen sichtbaren Abschnitt des Gehäuses und dient hier als Abdeckkappe.

Die entstehenden einzelnen Segmente sind unabhängig voneinander beweglich, wodurch eine gezielte Beeinflussung der Entfaltung des Gassacks ermöglicht wird.

Die Separationslinien sind durch Schwächungszonen gebildet, die auf bekannte, herkömmliche Weise, z.B. als Reißlinien, gestaltet sein können.

Bevorzugt ist in einem Bereich, in dem die Seitenwand in den Bodenabschnitt übergeht, ein Scharnier, z.B. ein Filmscharnier, ausgebildet, das eine Bewegung der Seitenwand relativ zum Bodenabschnitt ermöglicht. Hierdurch kann die Seitenwand vollständig nach außen wegklappen, was die Austrittsöffnung vergrößert. Das Scharnier ist vorzugsweise möglichst weit entfernt vom Deckelteil angeordnet, z.B. auf der Höhe einer Gasgeneratorbefestigung.

Bevorzugt ist der Bodenabschnitt durch mehrere Klappen gebildet, die schwenkbar an einem unteren Ende der Seitenwand fixiert sind. Auf diese Weise ist es nicht erforderlich, die Separationslinien auch im Bereich des Bodenabschnitts vorzusehen, da der Bodenabschnitt bereits aus mehreren separaten Segmenten besteht.

In einer bevorzugten Ausführungsform der Erfindung verlaufen die Separationslinien auf dem Deckelteil radial nach außen und über die Seitenwand bis zu einem unteren Ende der Seitenwand. Bei einem runden oder viereckigen Gassackmodul können z.B. drei oder vier Separationslinien vorgesehen sein, die radial über das Deckelteil und anschließend parallel zu einer Achse des Gehäuses über eine beispielsweise umlaufende Seitenwand bis zu deren unteren Ende verlaufen. In diesem Fall zerfällt das Gehäuse bei der Aktivierung des Gassackmoduls in tortenstückartige Segmente.

Vorteilhaft ist das Gehäuse vor der Aktivierung des Gassackmoduls einstückig ausgebildet, wobei die Fertigung z.B. in einem Spritzgußverfahren aus einem geeigneten Kunststoffmaterial erfolgen kann.

Das Gassackmodul gemäß der Erfindung kann sowohl mit ringförmigen Gassäcken, bei deren Entfaltung ein Mittelteil des Gassacks am Gassackmodul zurückgehalten wird, verwendet werden, als auch mit herkömmlichen Gassäcken, bei denen sich auch das Mittelteil in den Fahrzeuginnenraum bewegt. Bei der Verwendung eines ringförmigen Gassacks beginnen die Separationslinien bevorzugt am Außenumfang eines Mittelteils des Deckelteils, das bei der Entfaltung des Gassacks am Gassackmodul zurückgehalten wird.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine schematische perspektivische Darstellung eines erfindungsgemäßen Gassackmoduls in einer ersten Ansicht; und
- Figur 2 eine schematische perspektivische Ansicht eines erfindungsgemäßen Gassackmoduls in einer zweiten Ansicht.

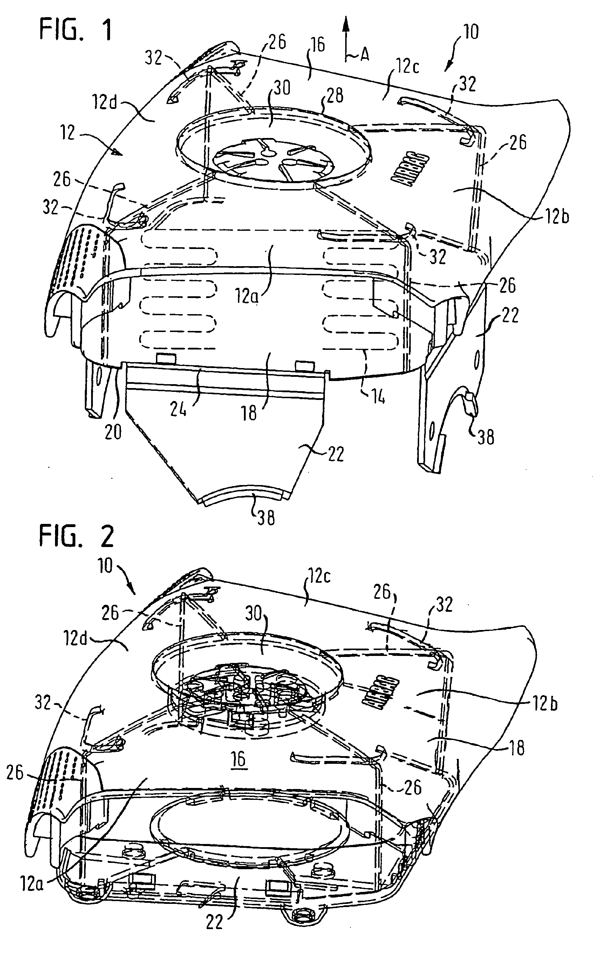

Figur 1 zeigt ein Gassackmodul 10, mit einem annähernd viereckigen Gehäuse 12 und einem im Gehäuse 12 aufgenommenen, gefalteten Gassack 14, der in Figur 1 nur angedeutet ist. Im Gehäuse 12 ist außerdem ein (hier nicht gezeigter) Gasgenerator aufgenommen, der bei einer Aktivierung des Gassackmoduls 10 das zur Entfaltung des Gassacks 14 notwendige Druckgas liefert.

Das Gehäuse 12 weist mehrere Abschnitte auf, die zunächst alle einstückig miteinander verbunden sind. Ein Deckelteil 16 bildet die Oberseite des Gassackmoduls 10 und schließt das Gassackmodul im eingebauten Zustand gegenüber einem Fahrzeuginnenraum ab, dient also als Abdeckkappe. An das Deckelteil 16 schließt sich senkrecht dazu eine umlaufende Seitenwand 18 mit vier im wesentlichen geradlinig verlaufenden Abschnitten an. An jedem Abschnitt der Seitenwand 18 ist am unteren, vom Deckelteil 16 abgewandten Ende 20 eine Klappe 22 angeformt, jeweils über ein Filmscharnier 24. Insgesamt sind also vier Klappen 22 vorgesehen, die zusammen einen Bodenabschnitt des Gehäuses 12 bilden.

Im Gehäuse 12 sind vier Schwächungszonen, z.B. Reißlinien oder Sollbruchstellen, vorgesehen, die Separationslinien 26 bilden, entlang derer sich das Gehäuse 12 öffnet, wenn das Gassackmodul 10 aktiviert wird. Die Separationslinien 26 verlaufen jeweils von einer ringförmigen Aufreißlinie 28, die einen bei der Öffnung des Gehäuses 12 feststehenden Mittelteil 30 des Deckelteils 16 umgibt, radial über das Deckelteil 16 nach außen, in diesem Fall jeweils zu einer Ecke des Gehäuses 12. Von dort verläuft jede Separationslinie 26 ohne Unterbrechung parallel zu einer Achse A (Figur 1) des Gehäuses 12 über die Seitenwand 18 bis zu deren unteren Ende 20. Das Gehäuse 12 ist somit in vier einzelne Segmente 12a-12d unterteilt.

In den Ecken des Deckelteils 16 ist jeweils eine Hilfsschwächungszone 32 vorgesehen, die das Öffnen des Gehäuses 12 unterstützt. Die Hilfsschwächungszonen 32 erlauben auch eine unabhängige Schwenkbewegung des Deckelteilabschnitts eines Segments 12a-12d bezüglich des Seitenwandabschnitts des jeweiligen Segments 12a-12d.

Bei der Montage des Gassackmoduls 10 werden in dem in Figur 1 gezeigten Zustand mit geöffneten Klappen 22 der gefaltete Gassack 14 sowie der (nicht gezeigte) Gasgenerator in das Innere des Gehäuses 12 eingesetzt. Ein mittlerer Abschnitt des Gassacks 14 wird am Gasgenerator und am feststehenden Mittelteil 30 des Deckelteils 16 befestigt. Dann werden alle Klappen 22 radial nach innen geschwenkt. Die Klappen 22 sind so geformt, daß in diesem Zustand ihre radial innenliegenden Ränder 38 an einem Flansch des Gasgenerators anliegen. Klappen 22, Gasgenerator und Gassack 14 sind auf bekannte Weise, eventuell unter Verwendung eines Gassackhaltelements, über bekannte Befestigungsmittel miteinander verbunden. Auf diese Weise bildet das Gassackmodul 10 bereits vor seinem Einbau im Fahrzeug eine nach außen abgeschlossene Einheit. Dieser Zustand ist in Figur 2 gezeigt. Zur Montage in einem Fahrzeug muß das Gassackmodul 10 lediglich mittels bekannter Befestigungsmittel am Fahrzeug fixiert werden.

Das Gassackmodul 10 kann als sogenanntes Floating-Horn-Modul ausgebildet sein, d.h. es läßt sich so in einem Lenkrad befestigen, daß es zur Betätigung einer Hupe als Ganzes in dieses hineinbewegt werden kann.

Bei der Aktivierung des Gassackmoduls 10 und der Zündung des Gasgenerators öffnet sind aufgrund des erhöhten Innendrucks das Gehäuse 12 entlang der Separationslinien 26. Hierbei zerfällt das Gehäuse 12 in vier separate, nicht zusammenhängende Segmente 12a-12d. Da die Separationslinien 26 jeweils zwischen zwei Klappen 22 enden und bis zum unteren Ende 20 der Seitenwand 18 verlaufen, kann sich das Gehäuse 12 vollständig in die vier Segmente 12a-12d auftrennen.

Jedes der Segmente 12a-12d umfaßt einen Abschnitt des Deckelteils 16 und der Seitenwand 18 sowie eine Klappe 22 des Bodenabschnitts.

Die vier Segmente 12a-12d bleiben über die Befestigung der Klappen 22 am Fahrzeug bzw. am Gasgenerator miteinander verbunden, so daß keine losen Teile in den Fahrzeuginnenraum gelangen können. Es besteht jedoch kein direkter Zusammenhang mehr zwischen den Segmenten 12a-12d. Daher kann das Gehäuse 12 weit seitlich aufklappen und eine große Austrittsöffnung für den Gassack 14 freigeben. Da die Seitenwand 18 in jedem Segment 12a-12d über ein Scharnier 24 mit einer der Klappen 22 verbunden ist, können die Abschnitte der Seitenwand 18 und des Deckelteils 16 jedes Segments 12a-12d nach der Separierung des Gehäuses nach außen wegklappen, was die Austrittsöffnung vergrößert.

Das Gehäuse 12 bzw. sein Einbauraum in einem Fahrzeug kann auch so gestaltet sein, daß die einzelnen Segmente 12a-12d bzw. die Abschnitte der Seitenwand 18, die den jeweiligen einzelnen Segmenten 12a-12d zugeordnet sind, in eine bestimmte Position verschwenkt werden, in der sie eine Entfaltung des Gassacks 14 auf vorbestimmte Weise beeinflussen können.

Statt wie hier gezeigt mit einem ringförmigen Gassack, könnte das Gassackmodul auch mit einem herkömmlichen Gassack verwendet werden, dessen Mittelteil sich in den Fahrzeuginnenraum entfaltet. In diesem Fall könnten z.B. die Separationslinien gemeinsam in einem Mittelpunkt des Deckelteils beginnen.

## Patentansprüche

1. Gassackmodul,
mit einem Gehäuse (12), das ein Deckelteil (16), wenigstens eine mit dem Deckelteil (16) verbundene Seitenwand (18) und einen mit der Seitenwand verbundenen Bodenabschnitt umfaßt,
wobei das Gehäuse (12) mehrere vorbestimmte Separationslinien (26) aufweist, entlang derer sich das Gehäuse (12) bei einer Aktivierung des Gassackmoduls (10) öffnet, um einen Gassack (14) austreten zu lassen,
**dadurch gekennzeichnet, daß** die Separationslinien (26) so über das Deckelteil (16), die Seitenwand (18) und/oder den Bodenabschnitt verlaufen, daß nach der Aktivierung das Gehäuse (12) entlang der Separationslinien (26) in mehrere nicht unmittelbar zusammenhängende Segmente (12a-d) zerfällt, die jeweils einen Abschnitt des Deckelteils(16), der Seitenwand (18) und des Bodenabschnitts umfassen.

2. Gassackmodul nach Anspruch 1, **dadurch gekennzeichnet, daß** in einem Bereich, in dem die Seitenwand (18) in den Bodenabschnitt übergeht, ein Scharnier (24) ausgebildet ist, das eine Bewegung der Seitenwand (18) relativ zum Bodenabschnitt ermöglicht.

3. Gassackmodul nach Anspruch 2, **dadurch gekennzeichnet, daß** der Bodenabschnitt durch mehrere Klappen (22) gebildet ist, die schwenkbar an einem unteren Ende (20) der Seitenwand (18) fixiert sind.

4. Gassackmodul nach einem der vorhergehenden Ansprüche, **dadurch gekennzeichnet, daß** die Separationslinien (26) auf dem Deckelteil (16) radial nach außen und über die Seitenwand (18) bis zu einem unteren Ende (20) der Seitenwand (18) verlaufen.

5. Gassackmodul nach einem der vorhergehenden Ansprüche, **dadurch gekennzeichnet, daß** das Gehäuse (12) vor der Aktivierung des Gassackmoduls (10) einstückig ausgebildet ist.

6. Gassackmodul nach einem der vorhergehenden Ansprüche, **dadurch gekennzeichnet, daß** im Gehäuse (12) der gefaltete Gassack (14) untergebracht ist.
